**Europäisches Patentamt**

**European Patent Office**

**Office européen des brevets**

(19)

(11) **EP 1 463 281 A2**

(12) **EUROPEAN PATENT APPLICATION**

(43) Date of publication:
**29.09.2004 Bulletin 2004/40**

(51) Int Cl.$^7$: **H04M 7/00**, H04L 12/56

(21) Application number: **03104256.7**

(22) Date of filing: **18.11.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **26.03.2003 GB 0306911**

(71) Applicant: **Zarlink Semiconductor Limited Swindon, Wiltshire SN2 2QW (GB)**

(72) Inventors:
• **FERGUSON, William, Paul**
  **PL4 7LU, Plymouth (GB)**

• **VICKERY, Nigel**
  **PL6 7JG, Plymouth (GB)**
• **PARSLEY, Nicola D**
  **PL5 1UP, Plymouth (GB)**

(74) Representative: **Lind, Robert**
  **Marks & Clerk,**
  **Nash Court,**
  **Oxford Business Park South**
  **Oxford OX4 2RU (GB)**

(54) **packet buffer management**

(57) A method of synchronising the filling of a queue, present at an interface between a packet network and a synchronous data link for storing packet identifiers identifying packets received from the packet network, to an incoming packet flow, the method comprising receiving a packet at said interface, identifying the sequence number of said packet, setting a read pointer, pointing to the next packet identifier to be read from the queue, to a value which is a predefined amount less than the identified sequence number. The method also provides a means for extending and reducing the average size of the queue in order to maintain the average size at an optimum level.

Figure 1

**Description**

The present invention relates to packet buffer management and more particularly to packet buffer management at an interface between a packet network and a synchronous network.

Communication networks typically make use of one of two well established transmission mechanisms; circuit switched transfer and packet switched (or just packet) transfer. Older systems tend to use the former, and in the main use time division multiplexing (TDM) to divide the time domain, for a given frequency band, into time slots of equal duration. Circuits are defined by grouping together identical slot positions in successive time frames. Packet networks typically do not allocate fixed resources to transmitters, but rather route packets of data on a best efforts basis, using destination address information contained in packet headers, and network switches and routers. Packet networks are becoming more popular amongst network operators as they often provide better performance, and are more cost effective to install and maintain, than equivalent circuit switched networks.

Traditionally, telecommunication networks have made use of time division multiplexed (TDM) circuits to interconnect network switches (or exchanges). However, for the above mentioned reasons of performance and cost, many operators and leased line providers (who provide bandwidth to service providers) are moving towards replacing TDM circuits with packet networks. In many cases, switch to switch "sessions" will be provided entirely over packet networks. However, it is likely that for some years to come, certain operators will continue to rely upon TDM circuits to provide all or at least a part of the networks. This will necessitate interworking between packet networks and TDM "legacy" equipment.

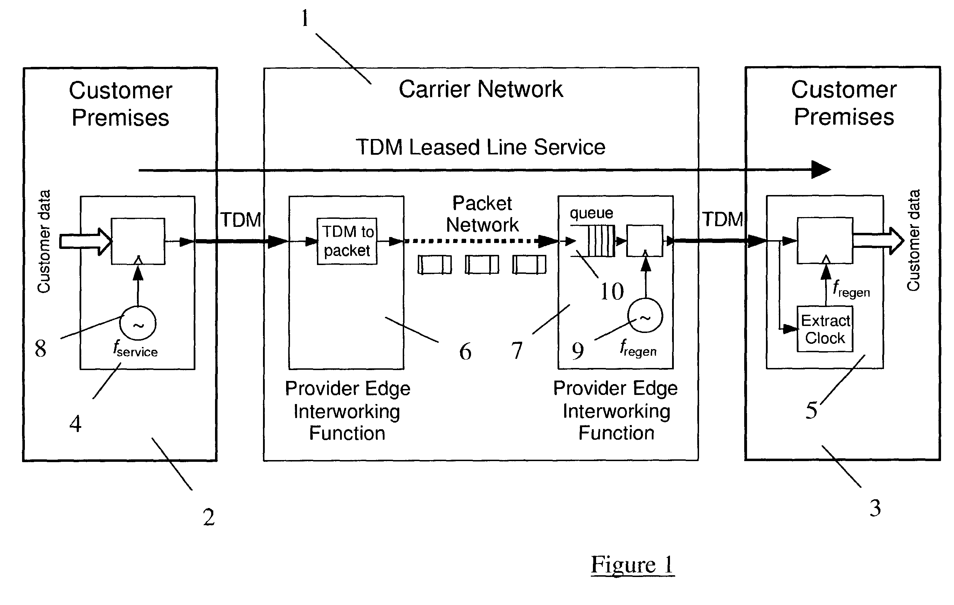

Figure 1 illustrates schematically a carrier network 1 which is a packet switched network such as an Ethernet, ATM, or IP network. The carrier network provides leased line services to interconnect first and second customer premises 2,3, both of which make use of TDM transmitters 4,5 to handle multiple information streams. The nature of these streams is unimportant, although they could for example be voice calls, videoconference calls, or data calls. In order to facilitate the interconnection of the TDM streams, the carrier network 1 must emulate appropriate TDM circuits.

TDM links are synchronous circuits with a constant (transmission) bit rate governed by a service clock operating at some predefined frequency. In contrast, in a packet network there is no direct link between the frequency at which packets are sent from an ingress port and the frequency at which they arrive at an egress port. With reference again to Figure 1, in order to provide TDM circuit emulation, interface nodes 6,7 (referred to below as the TDM to Packet Device (TPD) and the Packet to TDM Device (PTD)) at the edges of the packet network must provide interworking between the TDM links and the packet network in such a way that the TDM link at the egress side is synchronised with the TDM link at the ingress side. That is to say that the TDM service frequency ($f_{service}$) at the customer premises on the ingress side must be reproduced at the egress of the packet network ($f_{regen}$) as accurately as possible.

In order to compensate for the bursty nature of transmission over the packet network, packets received at the PTD are placed in a buffer, with packets being taken from the front of the buffer for sending over the outgoing TDM link. The size of the buffer is optimised to be large enough to prevent the buffer from draining completely due to some temporary increased transmission delay over the packet network, but still small enough to prevent the delay (or latency) in the end-to-end transmission significantly affecting the service provided to end users. In practice, the buffer comprises an area of memory for storing the data payloads of received packets. Data is stored in blocks or "granules", e.g. of size 64bytes. Where the payload of a given packet is greater than 64bytes in size, each granule (except the final granule) maintains a pointer to the next granule in the sequence (i.e. the data is stored as a "linked-list"). The buffer also comprises a queue which maintains an ordered list of packet locations within the buffer. Each entry in the queue contains the addresses of the first and last granules of a packet, and the number of granules making up the packet.

The consequence of any long-term mismatch in the service and regeneration frequencies will be that the buffer at the PTD will either fill up or empty, depending upon on whether the regenerated clock ($f_{regen}$) is slower or faster than the original clock ($f_{service}$), causing loss of data and degradation of the service. Also, unless the phase of the original clock ($f_{service}$) is tracked by that of he regenerated clock ($f_{regen}$), the lag in frequency tracking will result in small but nonetheless undesirable changes to the operating level of the buffer at the egress.

Some reliable method for synchronising both the frequency and phase of the clock at the egress of a packet network to those of the clock at the TDM transmitted must be provided. One approach is to use an algorithm to recover the transmitting clock frequency and phase from timestamps incorporated into packets by the sender, taking into account the transmission delay over the packet network. As the transmission time over the packet network is unpredictable for any given packet, an adaptive algorithm might be used. For example, some form of averaging might be employed to take into account variations in the transmission delay. For ATM, ITU standard I.363.1 and ATM Forum standard af-vtoa-0078 explain the concept of an adaptive clock recovery mechanism in general terms. In practice however, there will always be some small drift in the frequency and phase of the TDM clocks, resulting in a slow draining or filling of the buffer.

Due to the nature of a packet network, packets may take a number of routes between any two locations within that packet network, e.g. switches, routers, etc. The time taken by each packet to propagate through the packet network from the TPD to the PTD may also be affected by the latency, traffic load, provisioned bandwidth, and other factors of the various routes which it may take. Packets may therefore arrive at the PTD in a different order to that in which they were transmitted by the TPD.

When the transmitted packets reach the Packet Receive part of the PTD they need to be placed back into their original order of transmission before the TDM data streams can be extracted. This reordering is achieved using a "Resequencing Engine", which sorts the packets back into the order in which they were originally transmitted, as they arrive. This then allows for the original TDM data to be extracted from the packet payloads in the correct order. A typical Resequencing Engine maintains two pointers to the PTD queue. A first pointer points to the packet in the queue which should be read next, whilst a further pointer points to the packet in the stack which has the highest sequence number (SN) of any packet in the queue. The read pointer is initialised to the sequence number of the first packet received following initialisation of the Resequencing Engine.

A potential problem with this approach is that the first received packet may be a "rogue" packet which is for example received very early, because preceding packets are held up in the packet network. The read pointer and the queue size will together define a range of packet sequence numbers which will be allowed into the que ue. As a result of the rogue packet, this range may exclude all subsequent packets. The queue will empty, and no data will be available to the TDM playout engine.

According to a first aspect of the present invention there is provided a method of synchronising the filling of a queue, present at an interface between a packet network and a synchronous data link for storing packet identifiers identifying packets received from the packet network, to an incoming packet flow, the method comprising:

> receiving a packet at said interface;
> identifying the sequence number of said packet;
> setting a read pointer, pointing to the next packet identifier to be read from the queue, to a value which is a predefined amount less than the identified sequence number.

Embodiments of this aspect of the invention allow the playout from the queue to be resynchronised to the incoming packet stream, should it be detected that the playout and the incoming stream have moved out of synchronisation, e.g. to such an extent that incoming packets are being dropped because they are perceived to be arriving either too early or too late.

In a preferred embodiment of the first aspect of the invention, said synchronous data link is a TDM link such as might be used, for example, to transport communication data such as voice calls.

Typically, said queue forms part of a packet buffer, the buffer comprising a memory for storing packet data. The queue is arranged to store packet identifiers identifying packets received from the packet network and their respective storage locations within the buffer memory. Preferably, the queue is implemented as a circular queue of fixed size. A queue scope is defined as the range of packet sequence numbers from the read pointer to the read pointer plus the queue size. Arriving packets having sequence numbers within the queue scope are accepted into the queue. Packets having sequence numbers outside of the queue scope are rejected as either late or early. As the read pointer is advanced, so the queue scope advances. Shifting the read pointer in accordance with the present invention will result in the queue scope shifting by the same amount.

A method of managing a queue is also provided, the method comprising determining the level of synchronisation between a playout from the queue and the filling of the queue, and when this level falls below a certain threshold performing said resynchronisation method.

According to a second aspect of the present invention there is provided a gateway for interfacing a packet network to a synchronous data link and having an input for coupling to a packet network for receiving packets therefrom and an output coupled to the synchronous data link for playing out synchronous data thereto, the apparatus comprising:

> a buffer having a memory for storing received packet data and a queue for storing packet identifiers identifying packets received from the packet network and their respective storage locations in the buffer memory; and
> processing means for identifying the sequence number of a received packet and for setting a read pointer, pointing to the next packet identifier to be read from the queue, to a value which is a predefined amount less than the identified sequence number.

According to a third aspect of the present invention there is provided a method of controlling the average length of a queue, present at an interface between a packet network and a synchronous data link, for storing packet identifiers identifying packets received from the packet network, the method comprising:

> maintaining a read pointer which points to the next packet identifier to be read from the queue;
> extending the average queue length by responding to receipt of a next packet request from the synchronous data link transmitter by providing an under-run instruction and maintaining the read pointer unchanged; and reducing the average queue length by responding to receipt of a next packet request from the synchronous data link transmitter by identifying to that transmitter a packet of reduced size, and incrementing the read pointer.

Embodiments of the third aspect of the invention provide a mechanism for setting the average queue length to an optimum value, determined by a suitable controller which monitors the queue length, capable of coping with short term fluctuations in the packet arrival late without introducing an unnecessarily high degree of latency into the data transmission process.

Said packet of reduced size may be the packet currently pointed to by the packet identifier pointed to by the read pointer. Whilst the actual size of the packet may not be reduced, i.e. the amount of data in the packet remains unchanged, data provided to the playout engine is modified to indicate that the packet size is reduced. The playout engine will transmit only the reduced amount of data (which may be zero), whilst at the same time allocating all of the memory space occupied by the packet to a free memory pool. The read pointer will be incremented to point to the next slot in the queue.

In an embodiment of the invention, said step of reducing the average queue length comprises modifying a packet length field in a header of packet data stored in a buffer memory and pointed to by the packet identifier which in turn is pointed to by the read pointer. Preferably, packet data is stored in the buffer memory as a sequence of one or more granules, and it is the descriptor of the head granule which is modified as part of the reduce operation.

It will be appreciated that the third aspect of the invention is applicable in particular to architectures in which the synchronous data link is a TDM link. Implementation details may be in accordance with those set out above for the first aspect of the invention.

According to a fourth aspect of the present invention there is provided a gateway for interfacing a packet network to a synchronous data link and having an input for coupling to a packet network for receiving packets therefrom and an output coupled to the synchronous data link for playing out synchronous data thereto, the apparatus comprising:

a buffer having a memory for storing received packet data and a queue for storing packet identifiers identifying packets received from the packet network and their respective storage locations in the buffer memory; and control means for maintaining a read pointer which points to the next packet identifier to be read from the queue and for extending the average queue length by responding to receipt of a next packet request from the synchronous data link transmitter by providing an under-run instruction and maintaining the read pointer unchanged, and reducing the average queue length by responding to receipt of a next packet request from the synchronous data link transmitter by identifying to that transmitter a packet of reduced size, and incrementing the read pointer.

Preferably, the control means comprises means for monitoring the length of said queue, for determining an optimum average queue length, and for initiating extend and reduce operations in order to maintain the average queue length at said optimum average queue length.

Significant advantages may be achieved by combining the methods of the first and third aspects of the invention, and by implementing a gateway incorporating the features of the second and third aspects of the invention.

For a better understanding of the present invention and in order to show how the same may be carried into effect, reference will now be made by way of example to the accompanying drawings, in which:

Figure 1 illustrates schematically the interconnection of two TDM links via a packet network;
Figure 2 illustrates schematically a queue of a PTD implemented as a circular buffer;
Figure 3A illustrates a packet stream transmitted from a TPD;
Figure 3B illustrates a packet stream received by a PTD;
Figure 4 is a flow diagram illustrating a queue write algorithm;
Figure 5 is a flow diagram illustrating a queue read algorithm; and
Figure 6 is a flow diagram illustrating a HRSN update algorithm.

Considering again the scenario illustrated in Figure 1, where TDM transmitters 4,5 located at respective customer premises 2,3 are coupled via TDM links to interface nodes 6,7 of a carrier network 1 (the interface nodes are referred to hereinafter as the TDM to Packet Device (TPD) and the Packet to TDM Device (PTD)), the rate of transmission of packets from the TPD 6 is isochronous and determined by a service frequency ($f_{service}$) provided for example by a suitable Oscillator 8. However, the rate of packet arrival at the PTD 7 is perturbed by the intervening packet network. Packets will typically arrive in bursts separated by varying amounts of delay. The delay between successive packets and bursts will vary for example depending on the amount of traffic in the network. The characteristics of the network are non-deterministic, but over the long term the rate of arrival at the destination will equal the rate of departure from the source.

At the TPD 6, a timestamp is placed into the header of each packet prior to transmission. This timestamp is referred to here as the "Remote Timestamp", and is a running total of the bits received on the incoming TDM link since initialisation (wrap around of this count will occur to avoid counter overflow).

The output from the TDM "playout" engine at the PTD 7 is isochronous and determined by a second service frequency, referred to here as the "regeneration" frequency ($f_{regen}$). This is provided by a Digitally Controlled Oscillator (DCO) 9. The TDM playout engine is supplied from a Packet Delay Variation (PDV) buffer 10. If the buffer 10 has zero packets in it when the TDM output requires to transmit, an under-run will occur, which is undesirable. In order to minimise under-run events it is necessary to build up the PDV buffer 10 so that it contains sufficient packets to supply the TDM output for the majority of inter packet delays. However, the PDV buffer 10 cannot be made arbitrarily large because this directly increases the end to end latency which, in general, is required to be as low as possible, the maximum tolerable latency being dependent on the application. For example, voice requires lower latency than data.

When a packet arrives at the packet input of the PTD 7, the packet is placed into the PDV buffer 10. The packet data is stored within a buffer memory as a linked chain of one or more "granules". Each granule comprises a header or descriptor which records the number of granules in the chain, and flags indicating whether the granule is the first granule in the chain, the last granule, an intermediate granule, or the only granule in the chain. A granule also comprises a data area which stores the actual packet data. A pointer ("memory pointer") to the memory location of the packet is placed into a packet queue. As noted above, this memory pointer comprises the addresses of the first and last granules of the packet, and the number of granules in the packet. The PTD 7 maintains a TDM output counter which is a running total of the bits sent on the outgoing TDM link - this counter is initialised to the first received Remote Timestamp. A Local Timestamp is obtained for the received packet using this counter, and an adaptive clock control algorithm used to synchronise the service and regeneration clock frequencies using the Remote and Local Timestamps. The skilled person will appreciate that various different algorithms may be used for this purpose, and further details are not given here.

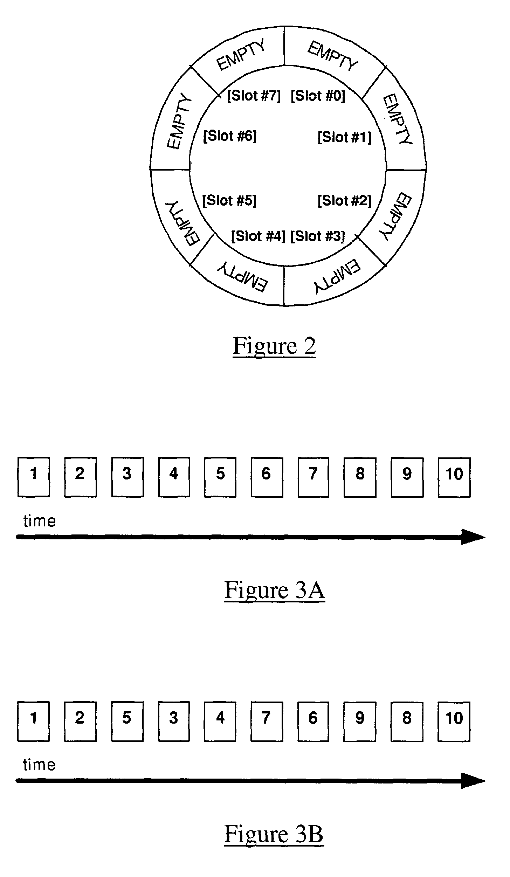

The queue is constructed as a circular buffer, illustrated in Figure 2. It will be understood that as there will be a larger number of possible sequence numbers than there are slots available in the queue to store packets, the sequence number of each packet will need to be interpreted and mapped to the correct slot in the queue. By limiting the possible queue sizes to powers of two (i.e. 2, 4, 8, 16, 32, 64, 128, 256, 512, 1024 slots), the operation of mapping packets to queue slots can be achieved through masking off the appropriate number of Most Significant Bits from the sequence number to generate the queue slot address.

As already explained above, due to the nature of the packet network, it is possible for packets to arrive out of sequence at the PTD 7. When the packets are sent from the TPD 6 they are appended with a sequence number, either in the RTP or Pseudo Wire protocol header. The next packet receives a sequence number one greater than the previous packet. It is this sequence number that is the key to reordering the packets at the PTD since it defines the original transmission order. When the packets are received at the PTD 7 the original order is recovered by examining the sequence number of each packet once it has been extracted from the packet's RTP or Pseudo wire protocol headers.

Figure 3A shows an example of packets leaving the packet interface of the TPD 6 in the original transmit order at regularly spaced intervals. In this example the first packet to be transmitted is appended with sequence number '1'; the packets follow in sequence number order after that. Figure 3B illustrates how different routes between the TPD 6 and the PTD 7 may affect the arrival order of the packets at the PTD. This is an example of how packets may arrive at the PTD in an order that is different to their original transmission order. If the PTD 7 was to try and extract the original TDM channel data from the packets in the example received order of Figure 3B, it would fail since the TDM data would be out of sequence and thus corrupted.

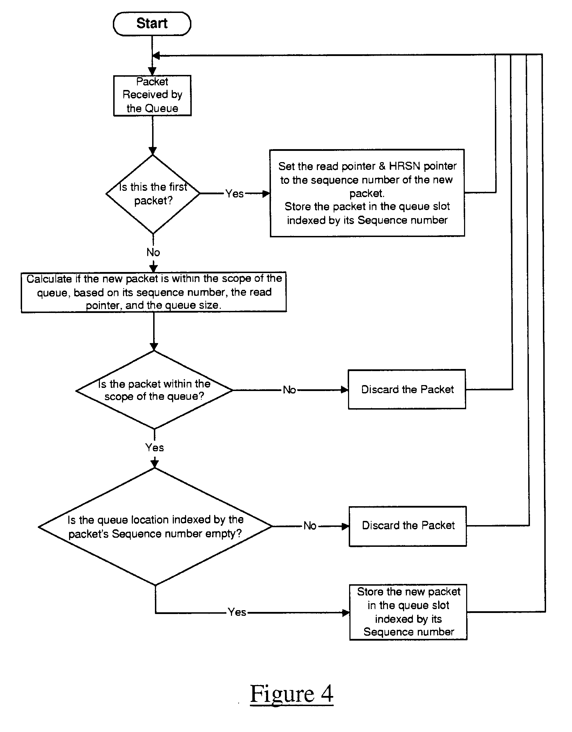

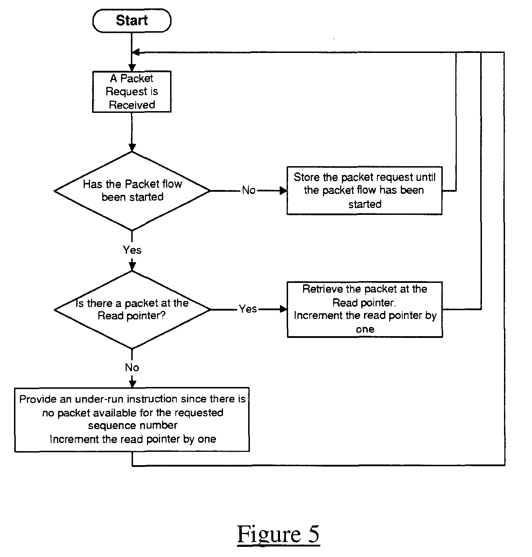

After the packet flow is started, there is a short delay before the TDM playout engine requests the first packet from the buffer. This delay allows time for the first few packets of the packet flow to arrive: in the example of Figure 3B packets 1, 2 and 5. Packets 3 and 4 arrive after packet 5 but since they are earlier in the sequence corresponding pointers are placed before packet 5 in the queue. The initial delay allows time for packets 3 and 4 to arrive before they are requested from the buffer. This reordering process continues, until all ten packets in this example have arrived and respective memory pointers have been placed in the queue in the original order in which the packets were transmitted by the TPD. Once a packet has been read out of the buffer by the playout engine and the packet data extracted from the packet granules, the playout engine releases the granule(s) making up that packet to the free granule pool. This allows new packet data to be written to these granules. Figure 4 is a flow diagram illustrating the algorithm used to write packets to the buffer/queue, whilst Figure 5 is a flow diagram illustrating the algorithm used to read packets from the buffer/queue.

The queue is associated with two external pointers:

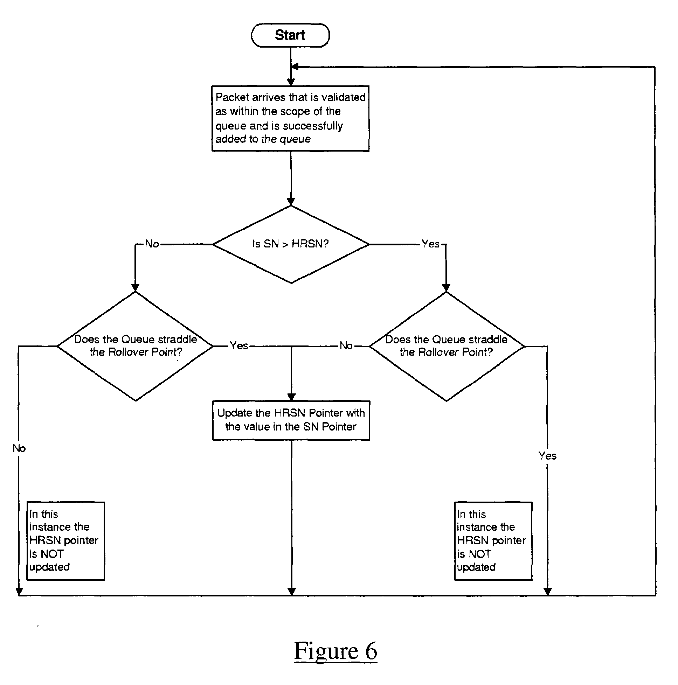

1) A read pointer (RP) which contains the sequence number of the next packet to be read from the queue, i.e. a pointer to the front of the queue.
2) A pointer which contains the sequence number of the packet with the highest sequence number to be successfully added to the queue. This is referred to as the Highest Received Sequence Number (HRSN) pointer, i.e. a pointer to the tail or end of the queue. Figure 6 illustrates the algorithm used to update the HRSN pointer.

The read pointer and HRSN pointer are used to calculate the length of the queue as follows:

Length of the queue = (HRSN pointer - Read pointer) + 1

This value is treated as the length of the queue, even though it may include gaps. Gaps are left in the queue to allow easy insertion of packets which do not arrive in their original transmission order. Since these gaps may be filled by the appropriate packet at any time before the read pointer is incremented past that position, they need to be counted within the queue length calculation. (Note that this formula does not take into consideration situations where the HRSN pointer is legitimately lower than the Read pointer.) As already explained, the average length of the queue (as distinct from the "size" of the queue which is a fixed value: in the example of Figure 3 the queue size is 8) is important in determining both the latency of the transmission path and the ability of the system to cope with the bursty nature of packet network transmissions. Typically, a micro-controller will be used to monitor and adjust the average queue length.

The algorithm for placing packets in the queue can be expressed in general terms as follows (more correctly reference should be made to placing packet memory pointers into the queue, but the term packet is used here for convenience):

1. When the packet flow starts, the first packet to arrive is placed at the front of the queue, regardless of the sequence number of that packet. The read pointer and HRSN pointer are both set to the sequence number of this first packet.
2. If a packet arrives with a sequence number between the current read pointer and the HRSN pointer, it is inserted into the queue in the position mapped to by that sequence number.
3. If a packet arrives with a sequence number that is higher than the current value of the HRSN pointer, and less than "the read pointer plus the queue size", it is placed in the position of the queue mapped to by the packet's sequence number. The HRSN pointer is then updated to the newly added packet's sequence number.
4. If a packet arrives with a sequence number lower than that pointed to by the read pointer, the packet is discarded because it has arrived "late".
5. If a packet arrives with a sequence number that is greater than "read pointer plus queue size" the packet is treated as an "early packet" and is discarded. (e.g. read pointer is 7, queue size is 16 packets, and a packet is received with the sequence number 25. Packet is early since 25 is greater than 'read pointer + queue size' = 16+7 = 23)
6. If a packet arrives with the same sequence number as a packet that is already in the queue (i.e. a duplicate sequence number), the new packet is treated as a "late packet" and is discarded.

As there is not an infinite number of bits in the packet sequence number, there will be a point at which the sequence number will roll over from its maximum value to zero. The procedures that validate the packet and make sure that it is not early or late, are able to detect when a sequence number roll over could affect the current packet validation. Rollover becomes an issue when the current queue scope straddles the zero sequence number. An example of this would be when a queue is sized for 16 packets, and 16 bit sequence numbers are in use (i.e. sequence number range is 0-65535). If the read pointer is currently 65530, then the scope of the queue would be 65530 to 9 inclusive, i.e. the scope of the queue is straddling the zero sequence number.

The HRSN pointer keeps track of the highest packet sequence number to be successfully added to the queue so far, relative to the position of the read pointer. In other words, it points to the end, or tail of the queue, which is important for the calculation of the length of the queue. The HRSN is only updated during an operation to write a packet to the queue. As with the sequence numbers of received packets the HRSN pointer will roll over at some point, and there could be a situation where the scope of the queue straddles the rollover (or zero sequence number) point. In this instance the HRSN pointer could be numerically less than the Read pointer but still be correctly set. This is detected by observing the Most Significant bits of the SN and the HRSN pointer. Note that since the HRSN pointer is updated after a packet is added to the queue this means that the packet has already been confirmed as valid and within the scope of the queue. This makes it easier to detect instances of rollover when the SN is numerically lower than the HRSN pointer.

As already mentioned, a micro-controller is responsible for monitoring the average queue length and for making adjustments to that queue length. One mechanism for achieving this control is the use of Extend and Reduce functions, which the micro-controller can instruct the queue to initiate.

Queue Extend Function

This function allows the average length of the queue to be extended by up to one packet at a time. Upon initiation of the Extend function, when the next packet is requested from the queue, instead of returning the packet at the read pointer, an under-run instruction is provided instead. An under-run instruction causes the TDM playout engine to include dummy data into the next TDM slot(s) instead of real data read from the buffer. The "length" of this under-run instruction can be programmed (by the micro-controller) to indicate any appropriate number of bytes from zero to the maximum permitted by the current flow, up to an absolute maximum of 2048 bytes. The read pointer is left unchanged after this operation. As during this period (on average) it would be expected that one packet would be received at the PTD, the queue length will increase on average by one packet.

Queue Reduce Function

This function allows the average length of the queue to be reduced by up to one packet at a time. Upon initiation of the Reduce function, when the next packet is requested from the buffer, the queue controller identifies the head granule of that next packet (from the next read pointer in the queue) and modifies the descriptor of the head granule. In this operation the granule's (packet length) header field can be changed to anything between its current length and zero. Consider for example the case where the packet length is reduced to zero. The TDM playout engine will receive the pointer from the head of the queue, and will retrieve the descriptor for the head granule of the indicated packet. As the descriptor of the head granule will indicate a length of zero, the playout engine will have no data to send in the next slot, and so will immediately issue a further packet request to the queue. Nonetheless, the granules identified in the retrieved packet pointer will be released to the free granule pool for further use. Each packet request will cause the read pointer to be incremented, so the initiation of the Reduce function will cause the read pointer to be incremented twice. During this period, on average one packet will be received into the queue. The net result will be that the average queue length is reduced by one packet.

One purpose of the extend and reduce functions is to provide flexibility in keeping the TDM output of the PTD in synchronisation with the clock on the TDM input of the TPD. The frequency $f_{service}$ at the PTD will be adjusted to match as closely as possible the frequency $f_{service}$ at the TDM input of the TPD, but there may still be discrepancies. The ability to adjust the queue using Extend and Reduce functions means that any discrepancies between the two clocks can be compensated for ensuring that the queue does not under-run or overflow.

In certain scenarios, the read pointer may need to be re-synchronised to the packet data flow. It is extremely desirable that this can be done without having to shut down and restart the packet flow. Consider for example the case where the first packet received for a packet flow is a rogue, stray or corrupt packet, and the read pointer is initially set to the sequence number of this first packet. If this packet has a sequence number significantly different to the packets which are subsequently received as part of the "genuine" packet flow, then the genuine packet flow may be discarded as the sequence numbers of these packets do not fall within the scope of the queue with respect to the first received packet.

A related problem arises should there be a loss of a large number of packets from the main packet flow (e. g. due to a failed link within the packet network). Following this interruption, once the PTD starts receiving packets from the main packet flow again, the external queue pointers (RP and HRSN) arc likely to be out of step with this flow.

To overcome these problems, the micro-controller is able to initiate a "Re-Synchronisation" function in order to bring the read pointer back into line with the main packet flow. This initiation may be requested for example should the micro-controller determine that packets which the TDM playout engine requires are being discarded. The function allows the read pointer of the queue to be re-set, and aligned with the sequence number of the first packet received after Re-Synchronisation. Direct modification of the read pointer in this way is important since the decision as to whether the packet is within the scope of the queue, is based on the read pointer.

Once Re-Synchronisation is initiated, further packets received at the PTD are discarded. Since packets will still be requested by the TDM transmit part of the PTD, the buffer (and queue) will eventually empty. Once the queue is empty the resequencing operation is conducted, which involves the following steps:

1. Set the read pointer to the sequence number of the next received packet minus half the queue size, i.e. the read pointer is positioned half the queue size before the next received packet.
2. Set the HRSN pointer to the sequence number of the next received packet

If the queue size is 16, and the sequence number of the next packet received (following initiation of the Re-Synchronisation function) is 64, the read pointer will be set to 64 minus (half of 16), $\Rightarrow$ Read pointer = 64 - 8 = 56. In effect the Re-Synchronisation operation places the first packet received after Re-Synchronisation in the middle of the queue with respect to the read pointer, by placing the read pointer half the size of the queue before it.

In addition to overcoming problems caused by rogue packets or interruptions in packet transmission, Re-Synchronisation will enable a new attempt to be made at locking the TDM clock at the PTD to that at the TPD, should the variation between the TDM clock frequencies be greater than an adaptive clock recovery scheme can track. Consider the situation when the queue at the PTD is first started. The initial setting of the regenerated clock ($f_{regen}$) may be such that it is significantly different to the original clock ($f_{service}$) at the customer premises 2.

Taking firstly the case where the clock ($f_{regen}$) has a much higher frequency than the clock ($f_{service}$). In this case packets will be requested from the PTD queue much more quickly than they are arriving from the packet network. This in turn means that the queue scope will advance more quickly than packets arrive to occupy positions within the queue. Therefore packets that should be added to the queue correctly, will instead appear to be late, and will be marked as such. Thus, if a packet stream starts from sequence number one, the packet with sequence number 10 could be arriving at the PTD, even though the regenerated clock frequency ($f_{regen}$) means that the TDM playout engine is already requesting the packet with sequence number 20. If the queue size is set to 8, this would mean that the read pointer (set to sequence number 19) would reject packet 10.

Taking now the case where the regenerated clock frequency ($f_{regen}$) is much lower than the original clock frequency ($f_{service}$), the arriving packet stream arrives more quickly than packets are being read out from the head of the queue. This means that the queue scope will not progress fast enough through the sequence numbers, relative to the incoming packet flow. The queue will fill (eventually overflowing) and further packets will be discarded as 'early'. Consider again a packet stream starting from sequence number one and a queue size set to 8, with packets being read from the queue at a constant rate, and packets arriving at a constant rate to be placed in the queue. Packet 10 may arrive when packet 3 is read from the queue, and packet 20 may arrive as packet 5 is read from the queue, i.e. the queue scope is not moving fast enough through the sequence numbers to keep up with the arrival of packets.

In both of these scenarios the frequency of the clock at the TDM output of the PTD would fail to converge quickly enough to match the original clock ($f_{service}$) before packets start to be rejected as not within the scope of the queue. After adjustment of the regenerated clock frequency ($f_{service}$), the queue would need to perform a resynchronise operation to make sure that it was once again realigned to the incoming main packet flow.

It will be appreciated by the person of skill in the art that various modifications may be made to the above described embodiments without departing from the scope of the present invention. For example, the method for storing memory pointers to packets could be different to a queue that is structured as a circular buffer. Packets could be stored in a linear queue, this queue being indexed using a linked list. When each packet arrives it is stored in the next empty queue slot regardless of its sequence number. The packets are then indexed using a linked list, which would relate the sequence number of each packet to its position in the queue. Should a packet need to be added to the queue between two existing packets, the linked list would be modified to insert the packet into the index in the correct place. A separate index of empty queue slots would be held to keep track of slots that are available for storing a new packet

In the implementation described above, an Extend operation is performed by supplying an under-run instruction of programmed length instead of the next packet. The Extend operation could also be done by:

- Supplying the previous packet again, and not incrementing the read pointer;
- Supplying the next packet, and not incrementing the read pointer;
- Supplying the last packet at the HRSN pointer, and not incrementing the read pointer;
- Supplying a packet at random from the current scope of the queue, and not incrementing the read pointer;
- Supplying specified data, and not incrementing the read pointer. This specified data could be comfort noise for example.

In the implementation described above a reduce operation is performed by modifying the length field in the header of the next packet. This could also be achieved by:

- Deleting the packet at the head of the queue, and incrementing the read pointer. Instead of modifying the packet header's length field, data could be physically deleted from the packet stored in the queue.

Instead of a HRSN pointer, the queue could keep a count of the queue length, as the number of slots it stretches ahead of the read pointer. The HRSN pointer would then be calculated based on the current value of the queue length instead of the implementation which calculates the queue length based on the current value of the HRSN pointer.

Considering now the Re-Synchronisation function, instead of waiting for all remaining packets to be read from the queue, Re-Synchronisation may happen as soon as it is requested. The existing packets in the queue would be deleted, without waiting for them to be read out normally. The next packet would then be inserted into the queue, with the read pointer and HRSN pointer being modified based on the new packet's sequence number.

Re-Synchronisation could happen automatically whenever the queue becomes empty. When it is detected

**EP 1 463 281 A2**

that the queue is empty, the Re-Synchronisation function is called when the next packet is received, which is then treated as the "first packet".

**Claims**

1. A method of synchronising the filling of a queue, present at an interface between a packet network and a synchronous data link for storing packet identifiers identifying packets received from the packet network, to an incoming packet flow, the method comprising:

   receiving a packet at said interface;
   identifying the sequence number of said packet;
   setting a read pointer, pointing to the next packet identifier to be read from the queue, to a value which is a predefined amount less than the identified sequence number.

2. A method according to claim 1, wherein said synchronous data link is a TDM link.

3. A method according to claim 1 or 2, wherein said queue forms part of a packet buffer, the buffer comprising a memory for storing packet data, and the queue being arranged to store packet identifiers identifying packets received from the packet network and their respective storage locations within the buffer memory.

4. A method according to claim 3, wherein a queue scope is defined as the range of packet sequence numbers from the read pointer to the read pointer plus the queue size, and arriving packets having sequence numbers within the queue scope are accepted into the queue, whilst packets having sequence numbers outside of the queue scope are rejected as either late or early.

5. A method of managing a buffer queue at an interface between a packet network and a synchronous data link, the method comprising determining the level of synchronisation between a playout from the queue and the filling of the queue, and when this level falls below a certain threshold performing a synchronisation method according to any one of the preceding claims.

6. A gateway for interfacing a packet network to a synchronous data link and having an input for coupling to a packet network for receiving packets therefrom and an output coupled to the synchronous data link for playing out synchronous data thereto, the apparatus comprising:

   a buffer having a memory for storing received packet data and a queue for storing packet identifiers identifying packets received from the packet network and their respective storage locations in the buffer memory; and
   processing means for identifying the sequence number of a received packet and for setting a read pointer, pointing to the next packet identifier to be read from the queue, to a value which is a predefined amount less than the identified sequence number.

7. A method of controlling the average length of a queue, present at an interface between a packet network and a synchronous data link, for storing packet identifiers identifying packets received from the packet network, the method comprising:

   maintaining a read pointer which points to the next packet identifier to be read from the queue;
   extending the average queue length by responding to receipt of a next packet request from the synchronous data link transmitter by providing an under-run instruction and maintaining the read pointer unchanged; and
   reducing the average queue length by responding to receipt of a next packet request from the synchronous data link transmitter by identifying to that transmitter a packet of reduced size, and incrementing the read pointer.

8. A method according to claim 7, wherein said step of reducing the average queue length comprises modifying a packet length field in a header of packet data stored in a buffer memory and pointed to by said packet identifiers.

9. A method according to claim 7 or 8, wherein said synchronous data link is a TDM link.

10. A method according to any one of claims 7 to 9, wherein said queue forms part of a packet buffer, the buffer comprising a memory for storing packet data, and the queue being arranged to store packet identifiers identifying packets received from the packet network and their respective storage locations within the buffer memory.

11. A method according to claim 10, wherein a queue scope is defined as the range of packet sequence numbers from the read pointer to the read pointer plus the queue size, and arriving packets having sequence numbers within the queue scope are accepted into the queue, whilst packets having sequence numbers outside of the queue scope are rejected as either late or early.

12. A gateway for interfacing a packet network to a synchronous data link and having an input for coupling to a packet network for receiving packets therefrom and an output coupled to the synchronous data link for playing out synchronous data thereto, the apparatus comprising:

a buffer having a memory for storing received packet data and a queue for storing packet identifiers identifying packets received from the packet network and their respective storage locations in the buffer memory; and control means for maintaining a read pointer which points to the next packet identifier to be read from the queue and for extending the average queue length by responding to receipt of a next packet request from the synchronous data link transmitter by providing an under-run instruction and maintaining the read pointer unchanged, and reducing the average queue length by responding to receipt of a next packet request from the synchronous data link transmitter by identifying to that transmitter a packet of reduced size, and incrementing the read pointer.

13. A gateway according to claim 12, wherein the control means comprises means for monitoring the length of said queue, for determining an optimum average queue length, and for initiating extend and reduce operations in order to maintain the average queue length at said optimum average queue length.

Figure 1

Figure 2

Figure 3A

Figure 3B

Figure 4

```
          ┌─────────┐
          │  Start  │
          └────┬────┘
               │
               ▼
          ┌─────────┐
          │ A Packet│
          │Request is│
          │ Received│
          └────┬────┘
               │
               ▼
          ╱─────────╲                    ┌──────────────────────┐
         ╱Has the Packet╲     No         │Store the packet request until│
        ╱  flow been     ╲────────────▶  │ the packet flow has been      │
         ╲  started      ╱               │        started               │
          ╲─────────────╱                └──────────────────────┘
               │
              Yes
               │
               ▼
          ╱─────────╲                    ┌──────────────────────┐
         ╱Is there a   ╲     Yes         │Retrieve the packet at the│
        ╱ packet at the ╲────────────▶   │     Read pointer.         │
         ╲ Read pointer?╱                │Increment the read pointer by│
          ╲────────────╱                 │          one              │
               │                         └──────────────────────┘
               No
               │
               ▼
  ┌────────────────────────────────┐
  │Provide an under-run instruction since there is│
  │  no packet available for the requested        │
  │         sequence number                       │
  │  Increment the read pointer by one            │
  └────────────────────────────────┘
```

# Figure 5

```
                        ┌──────────┐
                        │  Start   │
                        └────┬─────┘
                             │
                             ▼
              ┌────────────────────────────┐
              │ Packet arrives that is     │
              │ validated as within the    │
              │ scope of the queue and is   │
              │ successfully added to the   │
              │ queue                       │
              └──────────────┬──────────────┘
                             │
                             ▼
                         ◇ Is SN > HRSN? ◇
              No ◄─────────────────────────► Yes
```

Is SN > HRSN?

Does the Queue straddle the Rollover Point?

Yes ──────── No

Does the Queue straddle the Rollover Point?

Update the HRSN Pointer with the value in the SN Pointer

No

In this instance the HRSN pointer is NOT updated

Yes

In this instance the HRSN pointer is NOT updated

## Figure 6